# EUROPÄISCHE PATENTANMELDUNG

(11) **EP 4 818 124 A1**
(43) Veröffentlichungstag der Anmeldung: **07.10.2026**
(21) Anmeldenummer: 26170237.7
(22) Anmeldetag: 01.04.2026
(51) Int. Cl.: C02F 1/28, B01J 20/16, B01J 20/18, C02F 101/34, C02F 103/18, C02F 103/36

(54) **SELEKTIVE ENTFERNUNG KURZKETTIGER ETHERVERBINDUNGEN AUS ABWÄSSERN**

(30) Priorität: 02.04.2025 DE 102025112827
(71) Anmelder: CLARIANT INTERNATIONAL LTD, 4132 Muttenz (CH)
(72) Erfinder: Wulf, Gabriele, 84489 Burghausen (DE); Otromke, Malte, 83026 Rosenheim (DE); Neuhauser, Christian, 5134 Schwand im Innkreis (AT); Kurzhals, Rolf, 06188 Landsberg / OT Queis (DE); Seidl, Larissa, 84359 Simbach am Inn (DE); Kochan, Jozef, 84503 Altötting (DE)
(74) Vertreter: Zusammenschluss Clariant

(57) **Zusammenfassung**

Die Erfindung betrifft ein Verfahren zur Reinigung eines Abwassers enthaltend mindestens eine kurzkettige Etherverbindung, umfassend die Schritte:
a) Inkontaktbringen des Abwassers mit einem Adsorbens, das einen hydrophoben Zeolithen enthält, in einer Säule, um die Adsorption der kurzkettigen Etherverbindung durch das Adsorbens zu bewirken,
b) Trennen des Abwassers von dem Adsorbens, und
c) Desorption der kurzkettigen Etherverbindung von dem Adsorbens, unter Bedingungen, die eine Desorption bewirken, dadurch gekennzeichnet, dass das Adsorbens während der Schritte a) bis c) in der Säule bleibt.

## Beschreibung

Die Erfindung betrifft ein Verfahren zur Reinigung eines Abwassers enthaltend mindestens eine kurzkettige Etherverbindung, umfassend die Schritte:
a) Inkontaktbringen des Abwassers mit einem Adsorbens, welches ein hydrophober Zeolith ist, in einer Säule, um die Adsorption der kurzkettigen Etherverbindung durch das Adsorbens zu bewirken,
b) Trennen des Abwassers von dem Adsorbens, und
c) Desorption der kurzkettigen Etherverbindung von dem Adsorbens, unter Bedingungen, die die Desorption bewirken, dadurch gekennzeichnet, dass das Adsorbens während der Schritte a) bis c) in der Säule bleibt.

Außerdem betrifft die Erfindung auch eine Vorrichtung zur Durchführung des erfindungsgemäßen Verfahrens und die Verwendung eines Adsorbens zur Reinigung von Abwässern von kurzkettigen Etherverbindungen. Die Vorrichtung ist geeignet zur Durchführung des erfindungsgemäßen Verfahrens und umfasst:
- einen industriellen Abwasserstrom,
- mindestens eine Säule mit einem hydrophoben Zeolithen als Adsorbens,
- eine Schleppgaszuführung und
- Ventile,
wobei die Vorrichtung es erlaubt, mit Hilfe der Ventile die Schritte a) bis c) des erfindungsgemäßen Verfahrens durchzuführen.

Hinzu kommt die Verwendung eines Adsorbens, das einen hydrophoben Zeolithen enthält, zur Entfernung einer kurzkettigen Etherverbindung aus einem Abwasser enthaltend Ethylenglykole und / oder anorganische Salze.

Industrielle Abwässer aus Produktionen, die auf Reaktionen mit Ethylenoxid beruhen, führen als unerwünschte Nebenprodukte 1,4-Dioxan sowie 1,3-Dioxolan und Derivate sowie verschiedene "Glymes" (Mono-, Di-, Tri- und Tetraglyme) mit sich. Die unbehandelten Abwässer haben sehr unterschiedliche Konzentrationen und Zusammensetzungen sowohl an 1,4-Dioxan und Glymes als auch an anderen organischen Komponenten.

1,4-Dioxan als auch Glymes wurden 2021 als "Substance of Very High Concern" (SVHC) eingestuft und ihre gesundheitsschädigende Wirkung festgestellt. Für 1,4-Dioxan wurde ein Trinkwassergrenzwert von 3 bis 5 µg/l festgelegt. Auch das 1,3-Dioxolan wurde 2022 von der ECHA unter anderem als reproduktionstoxisch eingestuft (EC No 211-463-5, baua, May 2022). Damit steigen die Forderungen nach einer Eliminierung dieser Stoffe aus den Abwässern.

Es gibt bereits einige Verfahren, mit denen 1,4-Dioxan aus dem Abwasser entfernt werden kann. Dazu gehören die Oxidation mit UV/H₂O₂, Oxidation mit dem FENTON Prozess, Oxidation mittels Elektrolyse, Adsorption mit modifizierter Aktivkohle sowie biologischer Abbau mit speziellen Bakterien. Derartige Verfahren werden z.B. in der Offenlegungsschrift DE 3740695 A1 oder bei Tang et al., "Recent Advances in 1,4-Dioxane Removal Technologies for Water and Wastewater Treatment", Water (2023) 15 (8), p. 1535 beschrieben.

Jieqiong et al., ("Removal and complete combustion of 1,4-dioxane in water by a two-step reaction combining adsorption and catalytic combustion", Journal of Water Process Engineering 64 (2024) 105658) offenbart ein zweistufiges Reinigungssystem für die Entfernung und vollständige Verbrennung von 1,4-Dioxan aus reinem Wasser im Labor, wobei in einem ersten Schritt 1,4-Dioxan durch Adsorption aus dem Wasser entfernt wird und in einem zweiten Schritt das Adsorbens erwärmt wird, um das 1,4-Dioxan freizusetzen. Das freigesetzte 1,4-Dioxan wird anschließend in einer katalytischen Gasphasenreaktion vollständig verbrannt.

Es gibt den Bedarf für ein Verfahren, welches sich zur selektiven Entfernung von kurzkettigen Ethern aus industriellem Abwasser eignet, so dass diese separat zerstört werden können. Während polare organische Stoffe wie Glykole und Essigsäure in der Regel biologisch abbaubar sind, ist dies bei unpolareren Stoffen, wie den genannten kurzkettigen Ethern, oft nur bedingt der Fall.

Die Erfindung ermöglicht die selektive Abtrennung von kurzkettigen Ethern, also z.B. 1,4-Dioxan, Verbindungen aus der Gruppe der Dioxolane, wie 1,3-Dioxolan, Methyl-1,3-Dioxolan oder Propyl-1,3 Dioxolan, und den Glymes, also kurzkettigen Ethern mit ringförmiger oder kettenartiger Struktur. Hierbei kann es sich auch um Derivate handeln, also z. B. entsprechend chlorierte, fluorierte oder aminierte Verbindungen. Die zu behandelnden Abwässer können hierbei innerhalb eines großen Konzentrationsbereichs mit kurzkettigen Ethern belastet sein und unabhängig davon zahlreiche andere polare Stoffe organischer Natur, insbesondere polare organische Verbindungen, wie mono- bis tetra-Ethylenglykole, C₁- bis C₃-Aldehyde, wie Formaldehyd, Acetaldehyd und Propionaldehyd aber auch anorganische Salze, insbesondere Sulfate und Natriumchlorid enthalten. Die Konzentration der anorganischen Ionen kann zum Beispiel im Bereich zwischen 1 ppm bis 400000 ppm (bezogen auf das Gewicht) im Abwasser sein.

Die Aufgabe der Erfindung wird gelöst durch ein Verfahren zur Reinigung eines Abwassers enthaltend mindestens eine kurzkettige Etherverbindung, umfassend die Schritte:
a) Inkontaktbringen des Abwassers mit einem Adsorbens, das einen hydrophoben Zeolithen enthält, in einer Säule, um die Adsorption der kurzkettigen Etherverbindung durch das Adsorbens zu bewirken,
b) Trennen des Abwassers von dem Adsorbens und
c) Desorption der kurzkettigen Etherverbindung von dem Adsorbens, unter Bedingungen, die die Desorption bewirken, dadurch gekennzeichnet, dass das Adsorbens während der Schritte a) bis c) in der Säule bleibt.

Es hat sich gezeigt, dass bei der Adsorption polare Stoffe, wie z.B. Glykole, nur sehr wenig, kurzkettige Etherverbindungen hingegen aber hochselektiv adsorbiert werden. Als Adsorbens wird ein hydrophober Zeolith verwendet, insbesondere eignen sich die Zeolith-Produkte TZP9023, TZP9024 und TZP9028 der Firma Clariant.

Das Abwasser wird durch einen Adsorber geführt, der einen hydrophoben Zeolithen enthält und kann mit einem Schleppgas, d.h. Wasserdampf oder Inertgasen wie N₂, CO₂, etc. "in situ" desorbiert werden. Dieser Prozess kann durch Anlegen eines Unterdrucks noch beschleunigt werden. Die Wahl der Desorptionsart richtet sich nach den jeweilig vorhandenen Betriebsmitteln zur Abgas- oder Konzentratbehandlung am gegebenen Standort. Die Standzeit des Zeolithen wird im Wesentlichen durch die mögliche Anzahl der Regenerationszyklen bestimmt. Der Zeolith selbst ist bei den Bedingungen der Regeneration stabil, wichtig ist aber auch die Langzeitstabilität der Kombination aus dem Zeolithen und Binder. Es hat sich gezeigt, dass bei Durchführung des erfindungsgemäßen Verfahrens die Langzeitstabilität des Adsorbens in jeder Hinsicht über einen sehr langen Zeitraum erhalten werden kann.

Im Unterschied zu auf dem Markt befindlichen Aktivkohlen ist das zeolithenthaltende Adsorbens bedeutend selektiver, standfester und günstiger, wenn es mit dem erfindungsgemäßen Verfahren verwendet wird. Auch bei höheren TOC-Konzentrationen ist das erfindungsgemäße Verfahren problemlos einsetzbar, andere, im Abwasser vorhandene organische Belastungen führen hierbei zu keiner wesentlichen Verringerung der Standzeit, wohingegen bei einem Verfahren mit Aktivkohle der gesamte TOC adsorbiert wird und somit eine geringere Standzeit resultiert (TOC = "total organic carbon", d.h. die gesamte Konzentration an organischem Kohlenstoff). Als weitere Vorteile der Erfindung ergeben sich daher ein transportfreier und ein insgesamt umwelt- und energiefreundlicherer Prozess. Das von den Schadstoffen, also kurzkettigen Etherverbindungen, gereinigte Abwasser kann in die ortsübliche Peripherie (z.B. Kläranlage oder Umwelt) abgegeben werden.

In einem Schritt a) des Verfahrens wird mit einem Adsorbens die kurzkettige Etherverbindung adsorbiert, wobei sich das Adsorbens in einer Säule befindet und das Adsorbens mit dem Abwasser in Kontakt gebracht wird, sodass eine Adsorption stattfindet. Vorzugsweise wird die Adsorption so gestaltet, dass das Abwasser das Adsorbens in der Säule im Durchfluss passiert.

Idealerweise weist das Abwasser eine Temperatur unter 30 °C auf, da dies für die Adsorption nach Schritt a) vorteilhaft ist. Optional kann das Abwasser in einem vorgelagerten Schritt entsprechend gekühlt werden.

Das Adsorbens enthält einen hydrophoben Zeolithen oder besteht aus diesem. Das Adsorbens kann als Pulver vorliegen oder kann in geeigneter Weise geformt sein, zum Beispiel als Extrudat oder Granulat. Liegt das Adsorbens geformt vor, so ist es bevorzugt, dass das Adsorbens neben dem hydrophoben Zeolithen ein Bindemittel, wie zum Beispiel ein Bindemittel auf der Basis von Aluminiumoxid, Siliziumdioxid oder Ton enthält, bevorzugt wird Ton. Der Zeolith kann beispielsweise ZSM-5, d.h. ein Zeolith mit MFI-Struktur, oder Zeolith-Beta sein. Unter einem hydrophoben Zeolithen wird verstanden, dass die Adsorption unpolarer Stoffe bevorzugt gegenüber einem polaren Stoff wie z.B. Wasser erfolgt. Der Zeolith weist typischerweise ein SiO₂/Al₂O₃-Verhältnis > 30 auf, vorzugsweise > 200 oder enthält kein Al. Der Zeolith kann aber auch ein SiO₂/Al₂O₃-Verhältnis zwischen 30 und 400 aufweisen, vorzugsweise zwischen 50 und 200. Als Adsorbens können insbesondere die Zeolithprodukte TZP9023, TZP9024 oder TZP9028 der Firma Clariant verwendet werden, die hydrophoben ZSM-5 enthalten. Bei dem Zeolithprodukt TZP9028 liegt TZP9023 zusammen mit 20% Ton als Binder als Kugeln oder Granulate mit einem Durchmesser von ca. 1 mm bis 8 mm vor.

Unter kurzkettiger Etherverbindung werden folgende Stoffe verstanden: 1,4-Dioxan, eine oder mehrere Verbindungen(en) aus der Gruppe der Dioxolane, wie 1,3-Dioxolan, Methyl-1,3-Dioxolan, Chlormethyl-1,3-Dioxolan oder Propyl-1,3-Dioxolan, und den Glymes wie Mono-, Di-, Tri- und Tetraglyme. Bei den kurzkettigen Etherverbindungen kann es sich auch um Derivate handeln, also z. B. entsprechend chlorierte, fluorierte oder aminierte Verbindungen sowie Gemische dieser Verbindungen. Diese kurzkettigen Etherverbindungen mit ringförmiger oder kettenartiger Struktur können sowohl als Einzelstoffe als auch in beliebiger Mischung auftreten. Diese Verbindungen können jeweils in einer Konzentration von 0,1 mg/l bis 10000 mg/l im Abwasser vorliegen. Glyme(s) ist insbesondere eines oder mehrere Verbindungen ausgewählt aus Monoglyme, Diglyme, Triglyme, Tetraglyme.

Das erfindungsgemäß zu behandelnde Abwasser weist einen Konzentrationsbereich an kurzkettigen Etherverbindungen von 0,1 mg/Liter Abwasser bis 10000 mg/Liter Abwasser, vorzugsweise 1 mg/Liter Abwasser bis 1000 mg/Liter Abwasser, besonders bevorzugterweise 10 mg/Liter Abwasser bis 500 mg/Liter Abwasser auf. Das Abwasser kann entweder eine kurzkettige Etherverbindung aufweisen oder ein Gemisch mehrerer dieser Verbindungen. Neben den kurzkettigen Etherverbindungen kann das Abwasser beliebige andere Verunreinigungen enthalten, insbesondere polare organische Verbindungen, wie mono- bis tetra-Ethylenglykole, C₁- bis C₃-Aldehyde, wie Formaldehyd, Acetaldehyd und Propionaldehyd und anorganische Ionen, insbesondere Sulfationen Natriumionen und Chloridionen. Die Konzentration der anorganischen Ionen kann zum Beispiel im Bereich zwischen 0 ppm bis 400000 ppm (bezogen auf das Gewicht) im Abwasser sein. Der pH-Wert des Abwassers liegt typischerweise im Bereich zwischen 4 bis 10.

In einem Schritt b) des Verfahrens wird das Abwasser von dem Adsorbens abgetrennt, während das Adsorbens in der Säule verbleibt. Vorzugsweise wird hierbei einfach der Abwasserdurchfluss gestoppt und eventuell überstehendes Abwasser abgelassen.

In einem Schritt c) des Verfahrens wird eine Desorption der kurzkettigen Etherverbindung von dem Adsorbens, das sich in der Säule befindet, bewirkt. Hierbei wird zunächst das anhaftende und in den Poren befindliche Abwasser aus dem Zeolithen aus Schritt b) entfernt, vorzugsweise unterhalb des Siedepunktes von Wasser. Anschließend wird das vom Wasser im wesentlichen befreite Adsorbens Bedingungen unterworfen, bei denen eine Desorption der kurzkettigen Etherverbindungen stattfindet. Die Desorption kann zum Beispiel bei Normaldruck und erhöhter Temperatur über 50 °C stattfinden, bevorzugt ist hierbei ein Temperaturbereich zwischen 50 °C bis 300 °C. Bevorzugt ist auch ein erniedrigter Druck, zum Beispiel zwischen 1 mbar und 900 mbar (absoluter Druck), bevorzugterweise kombiniert mit einer erhöhten Temperatur zwischen 50 °C bis 300 °C, insbesondere 100 °C bis 200 °C. Als vorteilhaft hat sich bei der Desorption der Einsatz eines Schleppgases erwiesen, hierbei handelt es sich um Wasserdampf oder bevorzugterweise um ein Inertgas (Gas, dass unter den gegebenen Bedingungen keine chemische Reaktion eingeht), insbesondere N₂ oder CO₂, das die desorbierten kurzkettigen Etherverbindungen von dem Adsorbens wegtransportiert.

Bei der Verwendung der Säule zur Adsorption kann die Desorption durch Einleitung des Schleppgases zum Beispiel bei erniedrigtem Druck und erhöhter Temperatur bewirkt werden.

Das Schleppgas, das die flüchtigen Etherverbindungen enthält, kann dann in weiterer Weise, z.B. durch katalytische Zerstörung, d.h. katalytische Oxidation, aufgereinigt werden. Die desorbierten kurzkettigen Etherverbindungen können z.B. einer Einheit zur katalytischen Zerstörung zugeführt werden, hierbei kann Sauerstoff im notwendigen Verhältnis beigemischt werden. Die Verwendung eines Katalysators (z.B. EnviCat ^{®}) erlaubt eine Verwendung niedrigerer Temperaturen zur Zersetzung (300 °C bis 600 °C). Das durch die katalytische Zerstörung der kurzkettigen Etherverbindungen entstandene Abgas (vorwiegend CO₂ und H₂O) wird ausgeleitet.

Als zuverlässig haben sich folgende Bedingungen für die Desorption mit Schleppgas (N₂, CO₂ oder H₂O) erwiesen: Z.B. 1 Nm³/kg/h aber auch geringere Mengen sind möglich, z.B. Umgebungsdruck bei einer Temperatur von 160 °C bis 200 °C oder bei reduziertem Druck von 50 mbar und einer erhöhten Temperatur von 80 °C. Der Dampfdruck des Dioxans ist bei solchen Bedingungen um etwa 7 bis 10-mal höher als der Umgebungsdruck. Desorptionszeiten von 6 Stunden bis 8 Stunden, aber auch 12 Stunden bis 24 Stunden sind möglich.

Während der Schritte a) bis c) des Verfahrens verbleibt das Adsorbens in der Säule. Um das erfindungsgemäße Verfahren effizient zu betreiben, wird es im Durchfluss betrieben, d.h. während der Adsorption in Schritt a) wird das Abwasser durch die Säule geleitet, die das Adsorbens enthält.

Die hohe Selektivität der Adsorption von kurzkettigen Etherverbindungen, darunter insbesondere 1,4-Dioxan, kann experimentell, z.B. durch Adsorptionsisothermen, demonstriert werden. Es zeigt sich, dass die höhere Affinität gegenüber kurzkettigen Etherverbindungen auch durch polare organische Verbindungen, wie sie in dem Abwasser vorkommen, darunter insbesondere polare organische Verbindungen, wie mono- bis tetra-Ethylenglykole, C1- bis C3-Aldehyde, wie Formaldehyd, Acetaldehyd und Propionaldehyd und anorganische Ionen, insbesondere Sulfationen, Natriumionen und Chloridionen besteht.

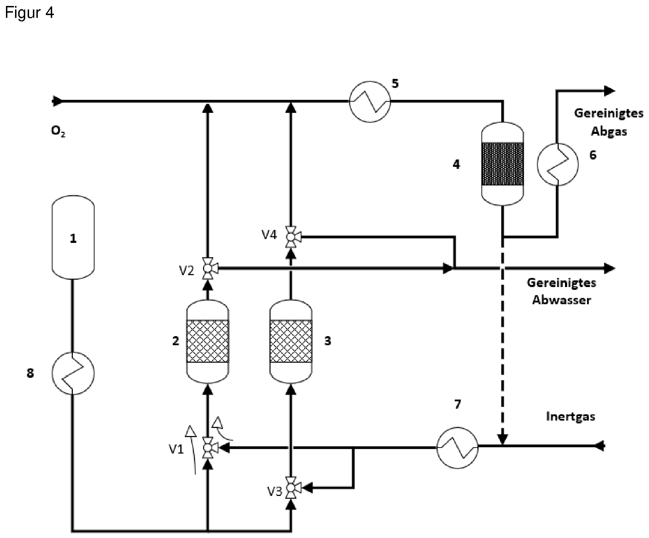

Figur 4 zeigt schematisch eine Apparatur zur Durchführung des erfindungsgemäßen Verfahrens. Die Vorrichtung umfasst:
- einen industriellen Abwasserstrom 1,
- mindestens eine Säule 2, 3 mit einem hydrophoben Zeolithen als Adsorbens,
- eine Schleppgaszuführung 7 und
- Ventile V1, V2, V3, V4,
wobei die Vorrichtung es erlaubt, mit Hilfe der Ventile V1, V2, V3, V4, die Schritte a) bis c) des erfindungsgemäßen Verfahrens durchzuführen. Insbesondere kann durch die Ventile V1, V2, V3, V4 Abwasser in die Säule(n) 2, 3 geleitet werden, um kurzkettige Etherverbindungen an dem Adsorbens zu adsorbieren (Schritt a)). Anschließend kann durch die Ventile V1, V2, V3, V4 gereinigtes Abwasser durch Ausleitung abgetrennt werden (Schritt b)). Im folgenden Schritt können in der Vorrichtung kurzkettige Etherverbindungen von dem Adsorbens desorbiert werden (Schritt c)) und durch die Ventile V1, V2, V3, V4 kann Schleppgas durchgeleitet werden, um die desorbierten kurzkettigen Ether abzuleiten.

Die Säule ist hierbei ein Behältnis, welches das Adsorbens enthält und für die Adsorption der kurzkettigen Etherverbindung geeignet ist. Vorzugsweise ist die Säule ein zylinderförmiges Behältnis, in dem das Adsorbens zum Beispiel als Schüttung vorliegt, und durch die das Abwasser in Richtung der Zylinderachse passiert. Die Dimensionen der Säule hängen von der Menge an zu behandelndem Abwasser ab, es sollte jedoch mindestens ein Durchmesser von 1 cm und eine Länge von 20 cm verwendet werden, bei entsprechend größeren Mengen an Abwasser und/oder stärkerer Beladung des Abwassers mit kurzkettigen Etherverbindungen sollten die Dimensionen entsprechend angepasst werden.

Die Vorrichtung ist vorzugsweise dadurch gekennzeichnet, dass sie mindestens zwei Säulen 2, 3 aufweist, die mit Hilfe der Ventile V1, V2, V3, V4 so geschaltet werden können, dass während in mindestens einer Säule 2, 3 kurzkettige Etherverbindungen aus dem Abwasser adsorbiert werden, um so Schritt a) des erfindungsgemäßen Verfahrens zu realisieren, gleichzeitig kurzkettige Etherverbindungen in der mindestens zweiten Säule 2, 3 desorbiert werden, um so Schritt c) des erfindungsgemäßen Verfahrens zu realisieren. Dies kann in beiden Säulen abwechselnd geschehen, zwischen dem Schritt a) und c) ermöglichen es die Ventile V1, V2, V3 und V4, das Abwasser von dem Adsorbens abzutrennen (Schritt b)). Die genaue Position der Ventile und ihre Anzahl in der Vorrichtung ist nicht festgelegt, sie sollen jedoch dazu geeignet sein, wie beschrieben Abwasser oder Schleppgas in die Säulen ein- und wieder auszuleiten. Die Ventile müssen daher geeignet sein, den Durchfluss von Abwasser und/oder Schleppgas zu kontrollieren.

Die Vorrichtung kann z.B. so gestaltet sein, dass sie es ermöglicht, in einer ersten Phase das Abwasser aus Abwasserquelle 1 (hier symbolisiert durch einen Behälter 1) durch die Ventile V1 und V2 durch die Säule 2 über das Adsorbens zu leiten und anschließend gereinigt auszuleiten (Schritt a)). Gleichzeitig kann über die Ventile V3 und V4 Schleppgas durch die Säule 3 geleitet werden, so dass dort kurzkettige Etherverbindungen desorbiert werden (Schritt c)) und optional der katalytischen Zerstörung in Einheit 4 zugeführt werden. In einer zweiten Phase können die Ventile V1, V2, V3 und V4 umgeschaltet werden, so dass nun das Abwasser durch die Ventile V3 und V4 durch die Säule 3 über das Adsorbens geleitet wird und gleichzeitig über die Ventile V1 und V2 Schleppgas durch die Säule 2 geleitet werden kann, so dass dort kurzkettige Etherverbindungen desorbiert werden und ebenfalls optional der katalytischen Zerstörung in Einheit 4 zugeführt werden. Ein Umschalten von der ersten Phase auf die zweite Phase erfolgt zum Beispiel, sobald das Adsorbens, das jeweils mit dem Abwasser in Kontakt ist, ausreichend beladen ist. Bei dem Übergang von der ersten zur zweiten bzw. zweiten zur ersten Phase wird die Säule, in der die Adsorption stattfindet, von dem Abwasser abgetrennt (Schritt b)), dies kann zum Beispiel dadurch erfolgen, dass durch Schaltung der Ventile Schleppgas, (z.B. Inertgas) das Abwasser verdrängt. Das Abwechseln zwischen Phase 1 und Phase 2 (Zyklus) kann beliebig oft wiederholt werden.

Die Adsorption der kurzkettigen Etherverbindungen in den Säulen 2 und 3 erfolgt vorzugsweise im kontinuierlichen Durchfluss des Abwassers, dieser kann aber auch unterbrochen werden.

Das gereinigte Schleppgas wird vorzugsweise zirkuliert, d. h. nach katalytischer Zerstörung der kurzkettigen Etherverbindungen in Einheit 4 kann das gereinigte Schleppgas wieder durch Ventil V1 oder V3 in die Säulen 2 oder 3 geleitet werden. In diesem Fall muss dafür gesorgt werden, dass genug Schleppgas im Kreislauf zwischen Säule 2, Säule 3 und der Einheit zur katalytischen Zerstörung 4 vorliegt und der Druck des Schleppgases genügend hoch ist. Vorzugsweise ist das Schleppgas in diesem Fall CO₂. Durch Kühlung des Abgases aus Einheit 4 (Wärmetauscher 6) kann das entstehende Wasser auskondensiert und wiederverwendet werden.

Optional weist die Vorrichtung einen Wärmetauscher 8 auf, der das Abwasser vor der Adsorption kühlt, da die Adsorption optimalerweise bei Umgebungstemperatur stattfindet, kann das Abwasser somit auf Temperaturen < 30°C gekühlt werden, bevor es in die Säule geleitet wird.

Die Erfindung betrifft außerdem die Verwendung eines Adsorbens, der einen hydrophoben Zeolithen enthält, zur Entfernung einer kurzkettigen Etherverbindung aus einem Abwasser enthaltend Ethylenglykole und / oder anorganische Salze. Vorzugsweise kann das Abwasser, aus dem die kurzkettigen Etherverbindungen entnommen werden, dadurch gekennzeichnet sein, dass das Abwasser mono- bis tetra-Ethylenglykol in einer Menge von 1 mg/l bis 20000 mg/l und / oder eines oder mehrere Ionen ausgewählt aus der Gruppe bestehend aus Natrium-, Sulfat-, oder Chlorid-Ionen in einer Menge von insgesamt 1 mg/l bis 200000 mg/l enthält.

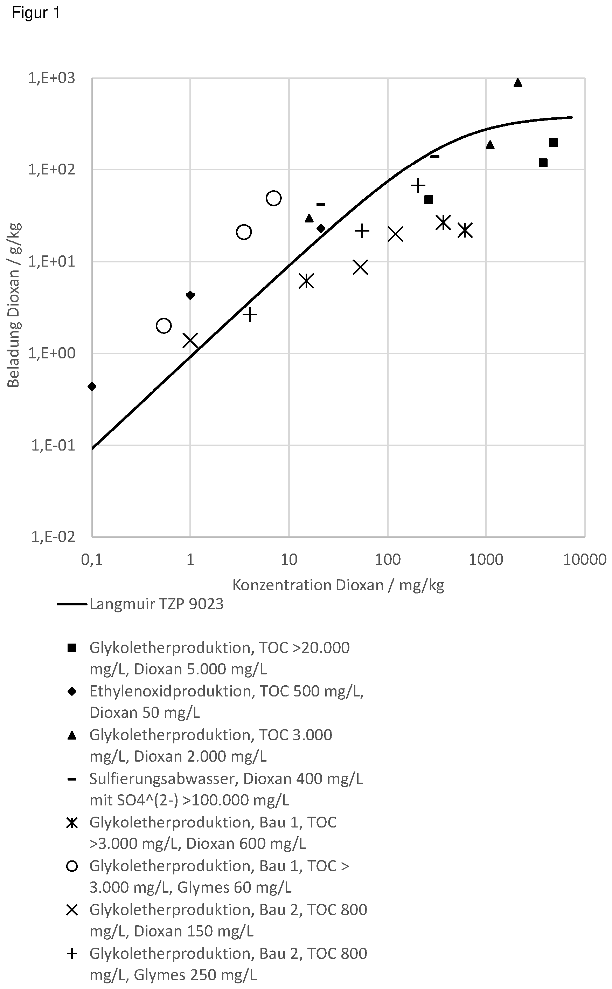

Figur 1: Messpunkte und gefittete Langmuir-Isotherme, gemessen mit den Adsorbentien TZP 9023 und TZP 9028 an verschiedenen industriellen Abwässern aus der Ethylenoxidverarbeitung.

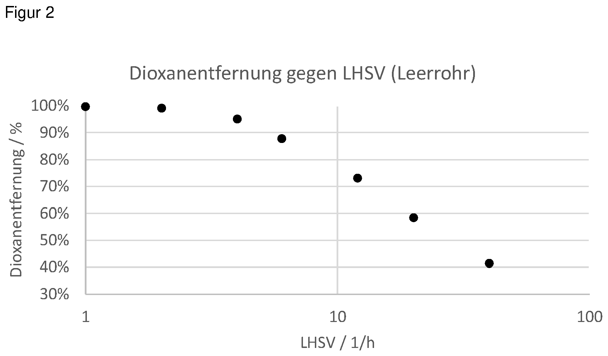

Figur 2: Verweilzeitversuche am Adsorbens TZP 9028 im Labor.
Figur 3: 5-facher Wiederholversuch der Desorption an TZP 9028 für 6 h bei 180 °C mit N₂ als Schleppgas, nach einer Beladung mit 50 ppm Dioxan im Abwasser.
Figur 4: Apparatur zur Durchführung des Verfahrens.
Figur 5: Pilotversuch an realem Abwasser, adsorbierte Menge auf dem Zeolithen für die ersten drei Zyklen.

### Beispiele

### Beispiel 1

Es konnten Adsorptionsisothermen für Einzelsubstanzen, wie z.B. 1,4-Dioxan, aufgenommen werden, die die Affinität des Zeolithen zu kurzkettigen Etherverbindungen im Allgemeinen demonstrieren. Die Affinität des Zeolithen zu kurzkettigen Etherverbindungen konnte im Wesentlichen für alle getesteten Abwässer belegt werden. Die vorliegenden Experimente belegen auch die Desorption der kurzkettigen Etherverbindungen von den als Adsorbentien eingesetzten Zeolithen.

Ein Zeolith vom Typ TZP 9023 (ZSM-5 ohne Binder) wurde verwendet, um Adsorptionstests an diversen dioxanhaltigen Abwässern durchzuführen. Es zeigte sich, dass der Gehalt an Dioxan stark abnahm, während sich die gemessene Summe allen Kohlenstoffs der organischen Bestandteile im Wasser (total organic carbon = "TOC") nur wenig verringerte. Insbesondere am Abwasser der Ethylenoxidherstellung wurde das Dioxan vollständig adsorbiert, während der TOC (bestehend aus 95% Monoethylenglykol) sich nicht entsprechend reduzierte.

**Tabelle 1: Dioxanadsorption mit TZP 9023 im Abwasser**

| **Zeolithkonzentration [g/L]** | **TOC [mg/L]** | **Dioxan [mg/L]** |
|---|---|---|
| 0 | 500 | 44 |
| 1 | 402 | 21 |
| 10 | 364 | ~1 |
| 100 | 122 | 0.1 |

### Beispiel 2

Um Adsorptionstests im Durchfluss zu simulieren, wurde eine Säule im Labormaßstab konstruiert, mit TZP 9028 Granulat als Adsorbens befüllt und mit Abwasser durchströmt. Die Säule hatte einen Durchmesser (innen) von 10 mm und eine Länge von 280 mm. In dieses Volumen wurden 13 g Adsorbens gefüllt, was eine Schüttdichte von 0,59 g/ml ergab.

Als erstes Medium wurde ein Abwasser mit geringer TOC-Konzentration 500 mg/L und einer Dioxan-Konzentration von 44 mg/L verwendet. Ein Screening der Verweilzeiten zeigte, in welchem Bereich eine spätere Anlage ausgelegt sein müsste. Gl. 1 zeigt die Definition der Verweilzeit (LHSV, Verhältnis Abwasser-Durchfluss zu Lehrrohrvolumen, Lehrrohrvolumen ist das Volumen in der Säule ohne Adsorbens), und **Error! Reference source not found.** zeigt die prozentuale Entfernung des Dioxans aus dem Abwasser der Ethylenoxidherstellung als Funktion der LHSV: $LHSV \left[{h}^{- 1}\right] = \frac{{\dot{V}}_{Abwasser}}{{V}_{Lehrrohrvolumen}}$ (Gl. 1)

Die Versuche zeigten, dass sich die TOC-Konzentration nur wenig verringerte (siehe Tabelle 2) und eine LHSV von höchstens 1/h für Abwässer aus der Ethylenoxidherstellung vorteilhaft ist, da so das enthaltene Dioxan sicher entfernt wird. Eine >99%ige Entfernung des Dioxans konnte bis zu einer LHSV von 2/h gewährleistet werden, während die TOC-Konzentration nur um ca. 30% bis 40% abnahm.

**Tabelle 2: TOC- und Dioxan-Konzentration während der Verweilzeitversuche an dem Adsorber im Labor.**

| LHSV [1/h] | TC [mg/L] | Dioxan [mg/L] |
|---|---|---|
| 1 | 246 | 0.01 |
| 2 | 285 | 0.32 |
| 4 | 289 | 2 |
| 6 | 284 | 5 |
| 12 | 281 | 11 |
| 20 | 287 | 17 |
| 40 | 292 | 24 |
| ∞ | 388 | 41 |

### Beispiel 3

Um einen wirtschaftlich sinnvollen Prozess zu entwickeln, muss der Adsorber (z.B. ein Zylinder mit granuliertem TZP 9028) wieder durch Desorption gereinigt werden können.

Um die Desorption verifizieren zu können, muss der Zeolith vollständig beladen sein, d.h. so stark mit Dioxan beladen sein, dass bei üblichen Konzentrationen kein weiteres Dioxan mehr adsorbiert werden kann. Um die vollständige Beladung schnell zu erreichen, wurde das Abwasser aus der Ethylenoxidherstellung auf 800 mg/L Dioxan aufkonzentriert und das Adsorbens mit diesem und einer LHSV von ca. 45/h über 120 min beladen. Danach wurde mit dem Abwasser aus der Ethylenoxidherstellung enthaltend 41 mg/L Dioxan und einer LHSV von 1/h getestet, ob weiteres Dioxan adsorbiert wurde. Die hierbei beobachtete Abgabe von Dioxan zeigte an, dass die vollständige Beladung erreicht wurde.

Anhand von simulierten Isothermen wurde eine Menge von ca. 1 Nm³/h/kg Adsorbens bei 180 °C für die Desorption ermittelt. Die Zeit für die Desorption wurde auf 6 h festgelegt. Das vollständig beladene Adsorbens wurde nun für 6 h bei einer absoluten Flussrate von 0,036 nL/min (nL = Normliter N₂, CO₂) und 200 °C bei Normaldruck regeneriert.

Der Nachweis einer erfolgreichen Desorption wurde geführt über die erneute Adsorption von Dioxan aus dem Abwasser aus der Ethylenoxidherstellung.

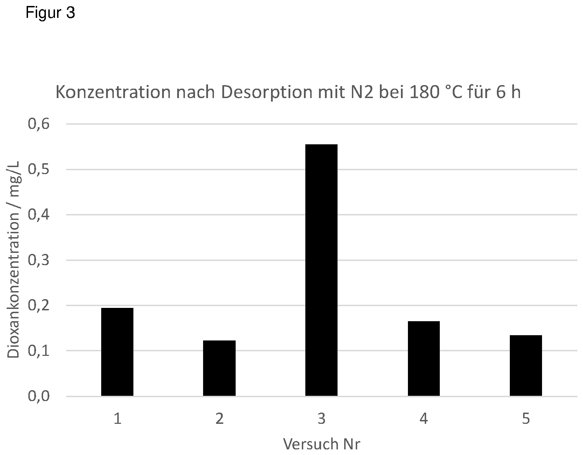

Danach wurde wieder bei einer LHSV von 1/h das normale Abwasser aus der Ethylenoxidherstellung über das Adsorbens gefahren und nach 90 Minuten eine Probe gezogen. Das Ergebnis zeigte eine Konzentration von 0,02 mg/L Dioxan, das Adsorbens wurde also vollständig regeneriert. Diese Prozedur wurde für fünf weitere Zyklen bei 180 °C und 6 h wiederholt (Figur 3). Lediglich im dritten Adsorptionsversuch zeigte sich eine leicht erhöhte Konzentration, die aber immer noch unter dem Zielwert von 1 mg/L lag. Das Desorptionsverfahren führt zu einem effektiv regenerierten Adsorbens.

Die Desorption konnte, bei ansonsten identischer Vorgehensweise, auch erfolgreich bei 50 mbar und 80 °C durchgeführt werden.

### Beispiel 4

Im Laborversuch mit 50 Zyklen, die eine Standzeit von ca. 2 Jahren simulieren, konnte nachgewiesen werden, dass das Adsorbens weder Alterungs- noch Ermüdungserscheinungen zeigte. Derartige Alterungserscheinungen bzw. Degradation können mittels Strukturanalyse (Pulverdiffraktion, XRD) und Sorptionsanalyse nachgewiesen werden. Im XRD war keine qualitative Veränderung (Amorphisierung, Umkristallisation etc.) erkennbar, auch die BET-Oberfläche blieb mit 322 m²/g im Rahmen der Messgenauigkeit konstant.

Bei der Desorption von Etherverbindungen höherer Kettenlänge (z.B. Tetraglyme) ist zu beachten, dass der Dampfdruck von Tetraglyme niedriger ist als bei anderen Ethern. Hier muss eine Kombination aus Vakuum und Temperatur so gewählt werden, dass die Desorption erfolgen kann, im Falle von Tetraglyme 50 mbar und 200 °C.

Eine thermogravimetrische Analyse (TGA) mit Massenspektrometrie (MS) eines mit dioxanhaltigem Abwasser beladenen TZP 9028 zeigte, dass bis 300 °C die meisten Stoffe desorbiert sind und bis 500 °C kein weiterer Massenverlust auftritt. Das MS zeigt, dass für kurzkettige Etherverbindungen wie Dioxan, Dioxolan und kurzkettige Glymes das Desorptionsmaximum bei ca. 135 °C liegt.

### Beispiel 5

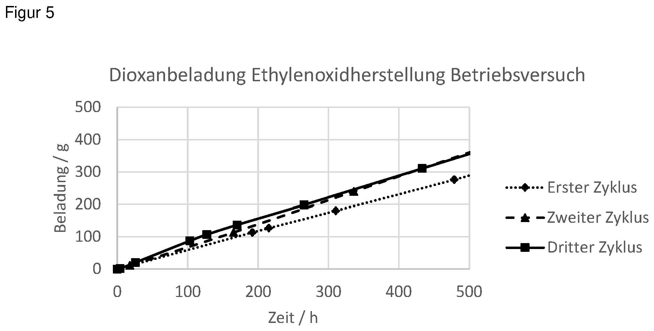

Abwasser aus der Ethylenoxidherstellung mit einer Dioxanbelastung von durchschnittlich 25-44 mg/l wurde direkt an der Anlage in einem Pilotversuch über sechs Monate von Dioxan gereinigt. Dazu wurde ein Edelstahlsäule mit ca. 40 Litern Inhalt mit dem Zeolithen TZP 9028 befüllt. Mit einem Drahtgewebe wurde das Granulat zurückgehalten. Etwa 20-30 L/h des Abwasserstromes wurden mit ca. 27 °C durch das Granulatbett geleitet und anschließend in die Kläranlage eingeleitet. Ca. 14 Tage lang wurden im Abwasser hinter der Säule Dioxanwerte < 1 mg/l gemessen. Der Hauptbestandteil des Abwassers, das Monoethylenglykol, brach hingegen nach einem Tag durch und wurde nicht mehr adsorbiert, ebenso Form- und Acetaldehyd, die ebenfalls im Wasser enthalten waren. Anschließend wurde der Zeolith zur Desorption mit Dampf (3,5 bar über Normaldruck, entspricht einer Gleichgewichtstemperatur von 147 °C) beaufschlagt, am Ausgang der Säule wurde ein Kondensatableiter eingefügt. Das Kondensat wurde aufgefangen und beprobt. Bis zu 1,5 m³ Kondensat wurde pro Desorption aufgefangen, die Desorption des Zeolithen konnte mit Proben jede Stunde nachgewiesen werden. In den GC-Analysen konnte gezeigt werden, dass das 1,3-Dioxolan, anschließend das 1,4-Dioxan und weitere Dioxolanderivate desorbiert wurden. Die Massenbilanz zeigte, dass das aufgefangene Dioxan der aus dem Abwasser entfernten Menge entsprach. Figur 5 zeigt die adsorbierte Menge auf dem Zeolithen für die ersten drei Zyklen.

## Patentansprüche

1. Verfahren zur Reinigung eines Abwassers enthaltend mindestens eine kurzkettige Etherverbindung, umfassend die Schritte:
a) Inkontaktbringen des Abwassers mit einem Adsorbens, das einen hydrophoben Zeolithen enthält, in mindestens einer Säule, um die Adsorption der kurzkettigen Etherverbindung durch das Adsorbens zu bewirken,
b) Trennen des Abwassers von dem Adsorbens, und
c) Desorption der kurzkettigen Etherverbindung von dem Adsorbens, unter Bedingungen, die die Desorption bewirken,
**dadurch gekennzeichnet, dass** das Adsorbens während der Schritte a) bis c) in der Säule bleibt.

2. Verfahren nach Anspruch 1, **dadurch gekennzeichnet, dass** die Desorption bei einer Temperatur zwischen 50 °C und 300 °C und einem absoluten Druck zwischen 1 mbar und 8 bar erfolgt.

3. Verfahren nach einem der Ansprüche 1 oder 2, **dadurch gekennzeichnet, dass** die Desorption mit einem Schleppgas erfolgt, welches N₂, CO₂ oder Wasserdampf ist.

4. Verfahren nach einem der vorhergehenden Ansprüche, **dadurch gekennzeichnet, dass** die kurzkettige Etherverbindung mindestens eine aus 1,4-Dioxan, aus den Dioxolanen wie 1,3-Dioxolan, Methyl-1,3 Dioxolan oder Propyl-1,3-Dioxolan oder aus den Glymes wie Mono-, Di-, Tri-, Tetra-Glyme ist.

5. Verfahren nach einem der vorhergehenden Ansprüche, **dadurch gekennzeichnet, dass** die desorbierten kurzkettigen Etherverbindungen in einer Einheit zur katalytischen Zerstörung katalytisch zerstört werden.

6. Verfahren nach einem der vorhergehenden Ansprüche, **dadurch gekennzeichnet, dass** das Adsorbens neben dem hydrophoben Zeolithen einen Binder enthält und als Granulat vorliegt.

7. Verfahren nach einem der vorhergehenden Ansprüche, **dadurch gekennzeichnet, dass** die Konzentration der kurzkettigen Etherverbindung im Bereich zwischen 0,1 mg/Liter Abwasser und 10000 mg/Liter Abwasser ist, bevorzugterweise zwischen 10 mg/Liter Abwasser und 1000 mg/Liter Abwasser.

8. Verfahren nach einem der vorhergehenden Ansprüche, **dadurch gekennzeichnet, dass** die Schritte a) bis c) mit einem Adsorbens aufeinanderfolgend durchgeführt werden oder gleichzeitig in mindestens zwei unterschiedlichen Säulen stattfinden.

9. Vorrichtung geeignet zur Durchführung des erfindungsgemäßen Verfahrens nach einem der Ansprüche 1 bis 8, umfassend:
- einen industriellen Abwasserstrom (1),
- mindestens eine Säule (2,3) mit einem Adsorbens enthaltend einen hydrophoben Zeolithen,
- eine Schleppgaszuführung (7) und
- Ventile (V1, V2, V3, V4),
wobei die Vorrichtung es erlaubt, mit Hilfe der Ventile (V1, V2, V3, V4) die Schritte a) bis c) des vorgenannten Verfahrens durchzuführen.

10. Vorrichtung nach Anspruch 9, **dadurch gekennzeichnet, dass** die Vorrichtung mindestens zwei Säulen (2, 3) aufweist, die mit Hilfe der Ventile (V1, V2, V3, V4) so geschaltet werden können, dass während in mindestens einer Säule (2, 3) kurzkettige Etherverbindungen aus dem Abwasser adsorbiert werden, gleichzeitig kurzkettige Etherverbindungen in der mindestens zweiten Säule (2, 3) desorbiert werden.

11. Vorrichtung nach Anspruch 9 oder 10, **dadurch gekennzeichnet, dass** sie einen Wärmetauscher (8) umfasst, mit dem das Abwasser vor der Adsorption gekühlt werden kann.

12. Vorrichtung nach Anspruch 11, **dadurch gekennzeichnet, dass** während der Desorption der kurzkettigen Etherverbindungen Schleppgas durch die Säulen (2,3) geleitet werden kann, um die desorbierten kurzkettigen Etherverbindungen einer Einheit zur katalytischen Zerstörung (4) zuzuführen.

13. Vorrichtung nach Anspruch 9 bis 12, **dadurch gekennzeichnet, dass** das gereinigte Schleppgas nach katalytischer Zerstörung der kurzkettigen Etherverbindungen wieder durch die Ventile (V1, V3) in die Säulen (2, 3) geleitet wird.

14. Verwendung eines Adsorbens, das einen hydrophoben Zeolithen enthält, zur Entfernung einer kurzkettigen Etherverbindung aus einem Abwasser enthaltend Ethylenglykole und / oder anorganische Salze.

15. Verwendung nach Anspruch 14, **dadurch gekennzeichnet, dass** das Abwasser monobis tetra-Ethylenglykol in einer Menge von 1 mg/l bis 20000 mg/l und / oder eines oder mehrere Ionen, ausgewählt aus der Gruppe bestehend aus Natrium-, Sulfat-, oder Chlorid-Ionen in einer Menge von insgesamt 1 mg/l bis 200000 mg/l enthält.
